# EUROPÄISCHE PATENTANMELDUNG

(11) **EP 1 176 657 A1**
(43) Veröffentlichungstag der Anmeldung: **30.01.2002**
(21) Anmeldenummer: 01890207.2
(22) Anmeldetag: 12.07.2001
(51) Int. Cl.: H01M 10/14, H01M 10/04, B65B 9/02

(54) **Vorrichtung zum Einführen von Batterieoder Akkumulatorplatten in Hüllen aus Separatormaterial**

(30) Priorität: 25.07.2000 AT 13072000
(71) Anmelder: BM-Battery Machines GmbH, 8273 Ebersdorf (AT)
(72) Erfinder: Schwetz, Anton, A-8273 Ebersdorf (AT); Rotbart, Thomas, A-8190 Birkfeld (AT); Ilgoutz, Friedrich, A-9170 Ferlach (AT); Kurzweil, Johann, A-8093 St. Peter am Ottersbach (AT)
(74) Vertreter: Beer, Manfred, Dipl.-Ing.

(57) **Zusammenfassung**

An der Abgabeseite einer Vorrichtung, in der aus bahnförmigem Separatormaterial schlauchförmige Hüllen (25) für Platten von Batterien oder Akkumullatoren hergestellt werden, ist ein Fächerstern (40) mit mehreren Fächern (41) angeordnet. Nachdem in ein Fach (41) eine Hülle (25) eingeführt worden ist, wird der Fächerstern (40) verdreht, um das Fach (41) mit der in ihm gehaltenen Hülle (25) in eine Einführstellung zu bewegen. In der Einführstellung wird die Hülle (25) im Fach (41) durch einen Anschlag (52) so weit verschoben, daß ihr einführseitiges Ende über Schenkel (56) von Spreizelementen (55) geschoben ist. Durch das von den Spreizelementen (55) offen gehaltene Ende der Hülle (25) wird eine Platte eingeführt, bis sie am Anschlag (52) anliegt. Dann wird die Hülle (25) mit in sie eingeschobener Platte durch Walzen (60) seitlich aus dem Fach (41) herausgezogen und der weiteren Verwendung zugeführt.

## Beschreibung

Die Erfindung betrifft eine Vorrichtung zum Einführen von Batterie- oder Akkumulatorplatten, insbesondere Platten für Industrieakkumulatoren oder Industriebatterien in (schlauchförmige) Hüllen aus Separatormaterial (sleeves).

Im folgenden werden positive und negative Akkumulator- oder Batterieplatten, auch wenn es sich um solche für Industrie- oder Traktionsbatterien handelt, einfach mit "Platten" bezeichnet. Im folgenden wird der Begriff "Hülle" für einen an beiden Enden offenen Abschnitt eines Schlauchs aus zu einem Schlauch mit einer Längsnaht geformten bahnförmigem Separatormaterial verstanden. Mit dem Begriff "Tasche" wird im folgenden eine an wenigstens einem Ende durch eine Quernaht geschlossene "Hülle" bezeichnet.

Hüllen oder Taschen für Platten können beispielsweise mit der aus der IT-PS 01280641 bekannten Vorrichtung aus bahnförmigem Separatormaterial hergestellt werden.

Problematisch ist es insbesondere bei großen Platten, also solchen für Industriebatterien oder -akkumulatoren, diese in die schlauchförmigen Hüllen ohne Beschädigung im richtigen Ausmaß durch Einschieben einzuführen, so daß die schlauchförmige Hülle - soferne dies vorgesehen ist - an wenigstens einem Ende zu einer Tasche verschlossen werden kann. Häufig werden Hüllen an beiden Enden offen gelassen. Dies gilt besonders für Industrie- und Traktionsbatterien, da durch wenigstens einseitig geschlossene Hüllen, also "Taschen", die Säurezirkulation behindert wird und dadurch die Leistung der Batterie verglichen mit einer Batterie, bei der die Platten in beidseitig offenen Hüllen stecken, um 10 bis 15 % kleiner ist.

Der Erfindung liegt die Aufgabe zugrunde, eine Vorrichtung der eingangs genannten Gattung anzugeben, mit der das Einführen von Platten in schlauchförmige Hüllen im gewünschten Ausmaß ohne weiteres möglich ist.

Gelöst wird diese Aufgabe in erster Linie mit den Merkmalen des unabhängigen Anspruches 1.

Bevorzugte und vorteilhafte Ausgestaltungen der erfindungsgemäßen Vorrichtung sind Gegenstand der Unteransprüche.

Die erfindungsgemäße Vorrichtung bietet den Vorteil, daß die an sich fertige, an beiden Enden offene, schlauchförmige Hülle für Platten in flacher Lage zum Einführen der Platte bereitgestellt wird, ohne daß in das Innere der Hülle das Einschieben der Platte behindernde Halteglieder eingreifen.

Zusätzlich erlaubt es die erfindungsgemäße Vorrichtung in einer Ausführungsform die Hülle genau in der für das Einführen einer Platte erforderlichen Lage bereitzustellen und in einer Weiterbildung dieser Ausführungsform auch das Einschieben der Platte in die zum Einschieben bereitgestellte Hülle im gewünschten Ausmaß sicherzustellen. In diesem Zusammenhang ist es wesentlich zu wissen, daß es für die Lebensdauer und die Funktion sowie für die Qualität von Batterien und Akkumulatoren, vornehmlich von Industriebatterien und Industrieakkumulatoren, von Bedeutung ist, daß die Platte in der Hülle bis zu einer vorgegebenen Tiefe eingeschoben ist, wobei die Einschiebetiefe bei allen Hüllen gleich groß sein soll.

Die Erfindung erstreckt sich auch auf eine Weiterbildung der Vorrichtung gemäß der Erfindung, die ein besonders vorteilhaftes Abtransportieren der Hüllen aus Separatormaterial mit eingeschobenen Platten erlaubt.

Weitere Einzelheiten, Vorteile und Merkmale der Erfindung ergeben sich aus der nachstehenden Beschreibung bevorzugter Ausführungsbeispiele, in der auf die Zeichnungen Bezug genommen wird. Es zeigt:
Fig. 1 ein Ausführungsbeispiel einer erfindungsgemäßen Vorrichtung in Seitenansicht,
Fig. 2 die Vorrichtung aus Fig. 1 in Draufsicht,
Fig. 2a eine Einzelheit der Vorrichtung von Fig. 1 und 2 im Bereich des Fächersternes in Draufsicht,
Fig. 2b die Einzelheit von Fig. 2a in Seitenansicht,
Fig. 2c die Einzelheit von rechts der Fig. 2a aus gesehen,
Fig. 3 in vergrößertem Maßstab eine Einzelheit der Vorrichtung aus Fig. 1 in Seitenansicht,
Fig. 4 die Einzelheit aus Fig. 3 in Draufsicht,
Fig. 4a ein Spreizglied in Seitenansicht,
Fig. 4b einen Einschubfinger bem Einführen einer Platte in eine Hülle
und Fig. 5 in vergrößertem Maßstab eine Ansicht der Vorrichtung aus Fig. 1 und 2 von links der Fig. 1 und 2 aus gesehen in vergrößertem Maßstab.

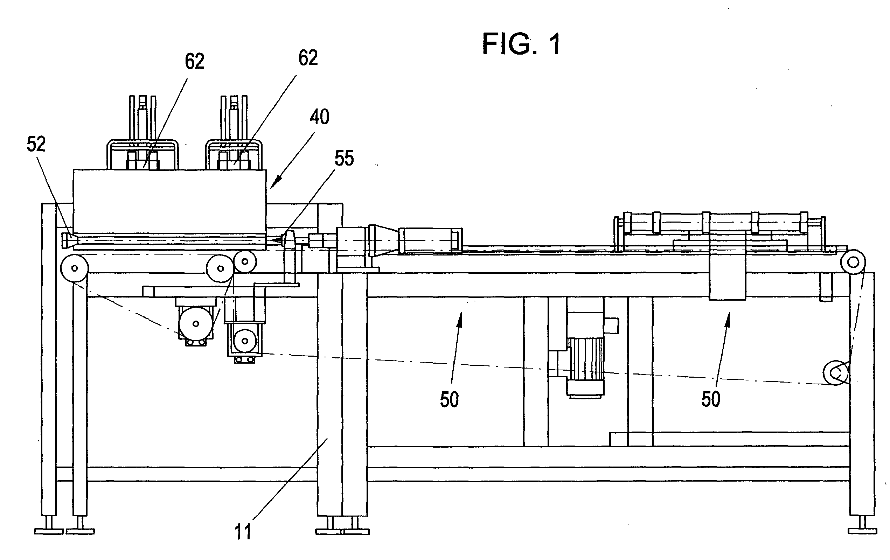

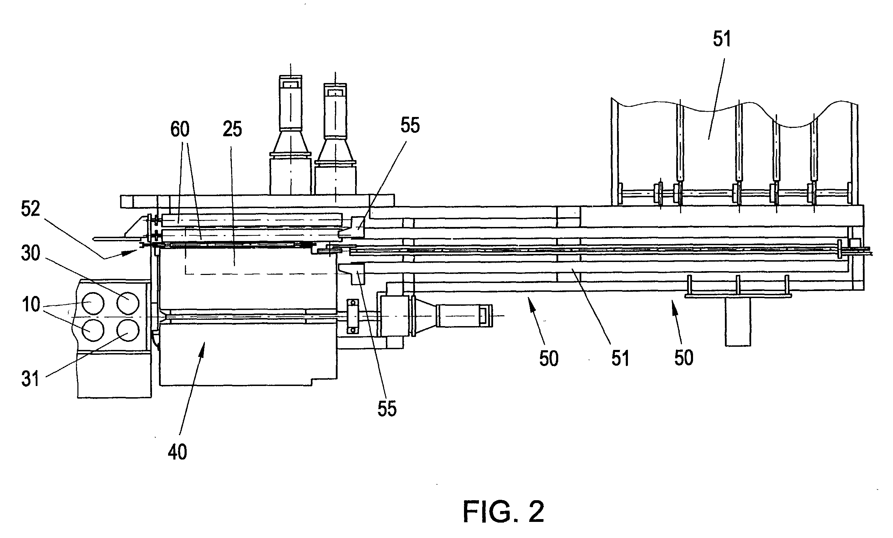

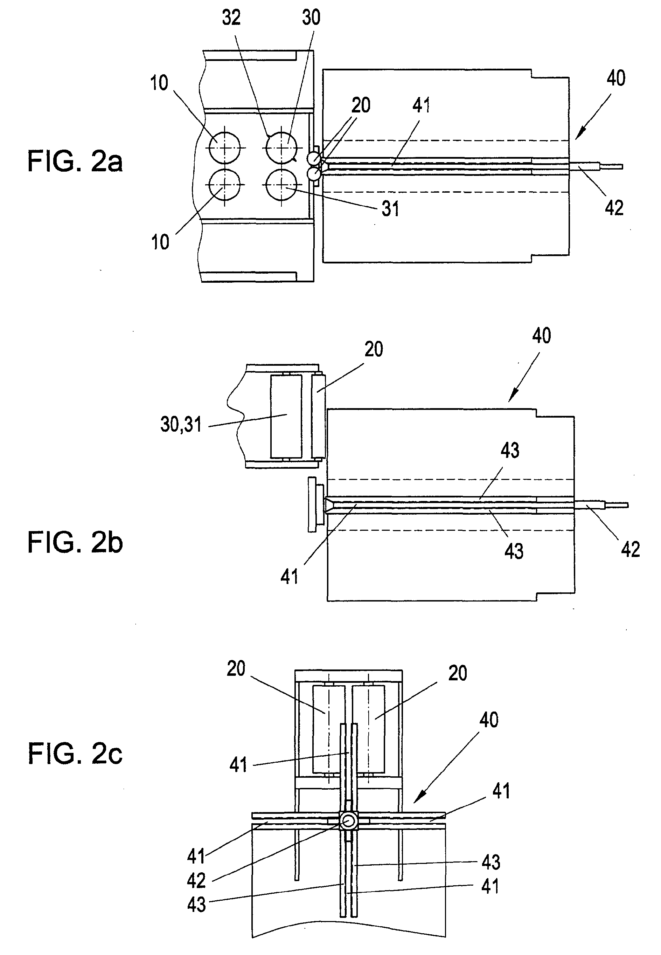

Die in den Fig. 1 bis 5 gezeigte Vorrichtung zum Einschieben von Platten für Batterien oder Akkumulatoren (positive oder negative Platten), insbesondere solchen für Industriebatterien und -akkumulatoren - in der Folge einfach "Platten" - in Hüllen ist beispielsweise an der Abgabeseite einer in Fig. 1 und 2 links angeordneten Vorrichtung zum Herstellen von schlauchförmigen Hüllen aus Separatormaterial angeordnet. In dieser Vorrichtung wird aus bahnförmigem Separatormaterial ein Schlauch mit einer längslaufenden Naht hergestellt. Von diesem Schlauch werden dann Hüllen mit der gewünschten Länge abgetrennt.

Der in der Vorrichtung zum Herstellen eines Schlauches hergestellte (endlose) Schlauch wird (Fig. 2a - 2c) durch (wenigstens) ein Förderwalzenpaar 10 vorgeschoben. Mit Hilfe einer Schneidvorrichtung werden Hüllen mit der gewünschten Länge vom Schlauch abgelängt. Die Schneidvorrichtung besteht beispielsweise aus einem Paar von Walzen 30, 31, wobei an der Walze 30 Schneidklingen 32 vorgesehen sind. Die Hüllen werden durch ein weiteres Förderwalzenpaar 20 in flach zusammengedrückter Lage in eines von mehreren, sternartig um eine Welle 42 angeordneten Fächern 41 einer Umsetzvorrichtung 40 ("Fächerstern") eingeschoben.

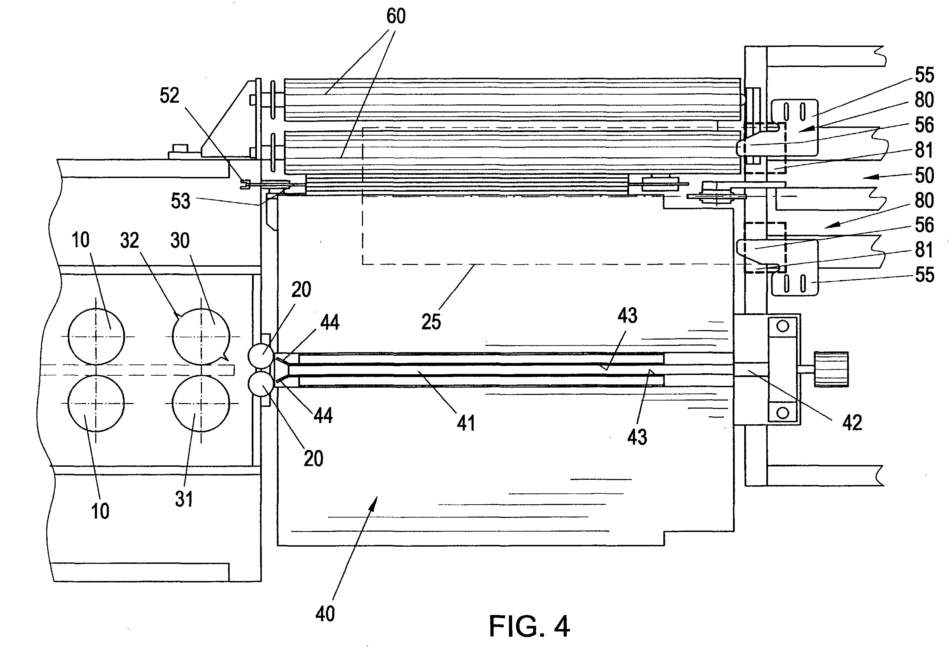

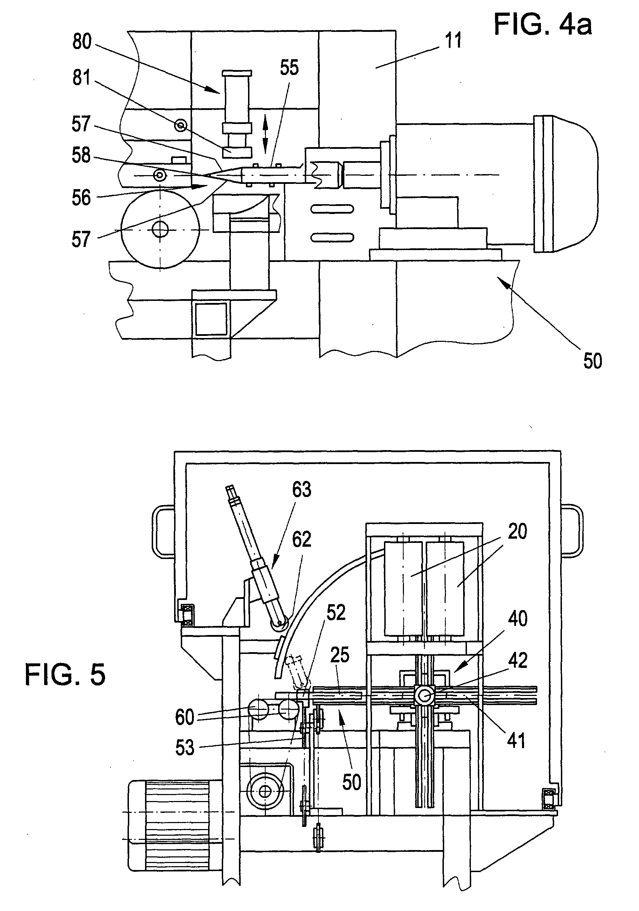

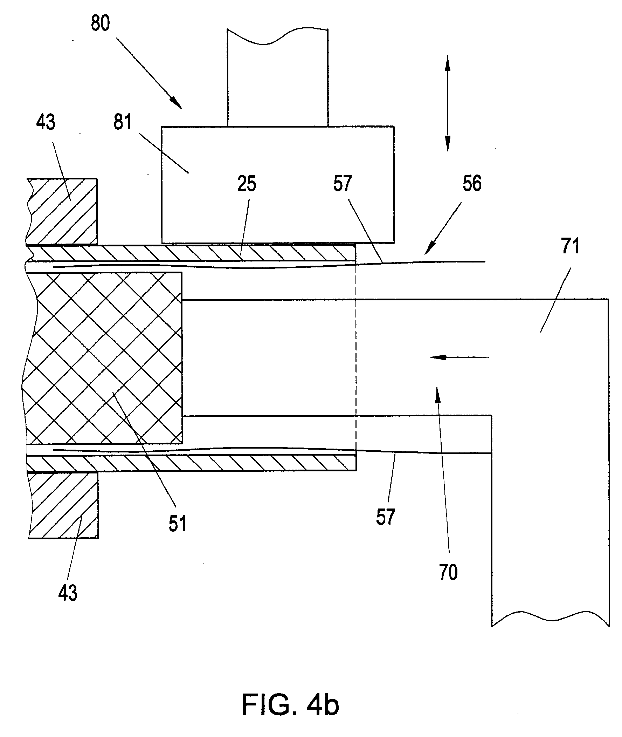

Die Fächer 41 des Fächersternes 40 werden von je zwei zueinander parallelen Wänden 43 gebildet, die an ihrer dem Walzenpaar 20 benachbarten Rändern trichterförmig angeordnete Leitbleche 44 tragen. Die die Fächer 41 begrenzenden Wände 43 sind sternförmig an einer zentralen Welle 42, die im Maschinengestell 11 drehbar gelagert ist, gebildet. Dabei ist die Breite der Wände 43 und damit die radiale Tiefe der Fächer 41 so gewählt, daß Hüllen 25 (also die Schlauchabschnitte) nicht zur Gänze zwischen den ein Fach 41 begrenzenden Wänden 43 aufgenommen sind, sondern radial außen über das Fach 41 vorstehen (sh. Fig. 4 und Fig. 5).

Sobald eine Hülle 25, in die eine Platte eingeschoben werden soll, in einem Fach 41 aufgenommen ist, wird die Umsetzvorrichtung 40 durch einen nicht näher erläuterten Antrieb um 90° verdreht, bis das Fach 41, in dem eine Hülle 25 aufgenommen ist, horizontal ausgerichtet und der Vorrichtung 50 zum Einschieben einer Platte 51 zugeordnet ist, also die in Fig. 5 für das linke Fach 41 gezeigte horizontale Lage einnimmt.

In dieser Lage wird an der in Fig. 4 linken Seite der Hülle 25 ein Anschlag 52 in Stellung gebracht und nach rechts in Fig. 4 bewegt, um die Hülle 25 so weit (nach rechts in Fig. 2 oder 4) zu verschieben, bis die Hülle 25 mit ihrem in Fig. 4 rechts liegenden Ende über Spreizglieder 55 geschoben ist. So ist die Lage der Hülle 25 in der Vorrichtung genau definiert und die in Fig. 4 rechts liegende Einschubseite der Hülle 25 wird durch die Spreizglieder 55 (sh. Fig. 4a) offen gehalten.

Die Spreizglieder 55 haben, wie in Fig. 4 und Fig. 4a ersichtlich, eine in Draufsicht (Fig. 4) im wesentlichen L-förmige Form mit einem auf die Hülle 25 hin weisenden und in diese einzuschiebenden Schenkel 56. Der Schenkel 56 wird von zwei Federlamellen 57 gebildet, die (Fig. 4a) zum freien Ende hin aufeinander zu konvergieren, so daß sich ein spitzes vorderes Ende 58 der Schenkel 56 ergibt.

Es hat sich als vorteilhaft erwiesen, die Hülle 25 wenigstens beim Einschieben einer Platte 51 im Bereich der Spreizglieder 55 festzuhalten. Hiezu können in einer Ausführungsform den Spreizgliedern Klemmeinheiten 80 mit Klemmstempeln 81 zugeordnet sein (vgl. Fig. 4a), die, z.B. durch Druckmittelantriebe, von oben her an das über die Schenkel 56 der Spreizglieder 55 geschobene Ende der Hülle 25 anlegbar sind, um die Hülle 25 an den Spreizgliedern 55 vorübergehen festzulegen.

Wenn eine Platte 51 von der in Fig. 1 und 2 rechts liegenden Zuführvorrichtung 50 vorgeschoben und in die Hülle 25 eingeschoben wird, werden die die sich konisch verjüngenden Schenkel 56 bildenden Lamellen 57 der Spreizglieder 55 elastisch auseinander bewegt, so daß eine Platte 51 zwischen ihnen und durch sie hindurch in die offen gehaltene Hülle 25 soweit eingeschoben werden kann, bis das vordere Ende der Platte 51, die durch den Anschlag 52 definierte Lage eingenommen hat.

In einer bevorzugten Ausführungsform besitzt die Einschubvorrichtung 50 beispielsweise zwei Einschiebefinger 70, die gewinkelt ausgebildet sind (vgl. Fig. 4b) und deren horizontale Schenkel 71 an dem bezogen auf die Einschieberichtung hinteren Rand der in eine Hülle 25 einzuschiebenden Platte 51 angreifen. Diese Ausführungsform der Einschiebefinger 70 erlaubt es die Platte 51 so weit in eine Hülle 25 einzuschieben, daß ihr hinterer Rand innerhalb der Hülle 25 angeordnet ist (Fig. 4b).

Mit der beschriebenen Anordnung wird eine genau definierte Lage der Hülle 25 in dem Fach 41 erreicht, da die Spreizglieder 55 im Maschinengestell 11 ortsfest montiert sind, wenngleich ihre Lage auch justierbar und/oder an die Breite der Hüllen 25 anpassbar sein kann und die Hülle 25 durch den Anschlag 52, der an dem in den Fig. 1 bis 4 links liegenden Rand der Hülle 25 angreift, im Fach 41 so weit verschoben wird, bis das in Fig. 4 rechts liegende Ende der Hülle 25 über die Spreizglieder 55 bzw. deren sich verjüngende Schenkel 56 geschoben worden ist. Diese Ausführungsform ist besonders vorteilhaft, wenn das in Fig. 4 rechte Ende der Hülle 25 über das Fach 41 seitlich auf die Spreizglieder 55 zu übersteht, da dann die Spreizglieder 55 selbst nicht in das Fach 41 an dem Fächerstern 40 eingeschoben werden müssen.

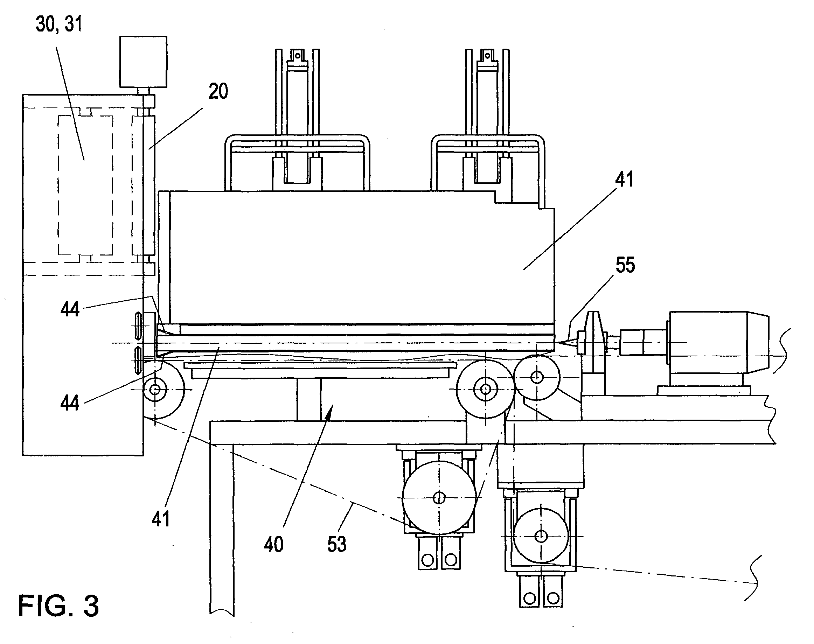

Wie die Fig. 3 und 4 nochmals zeigen, sind an der Einlaufseite in die von den Wänden 43 gebildeten auf der Welle 42 angeordneten Fächern 41 Schrägbleche 44 als Leitbleche vorgesehen, um ein sicheres Einführen der schlauchförmigen Hüllen 25 in die Fächer 41 zu gewährleisten.

Im gezeigten Ausführungsbeispiel sind an der Welle 42 vier Wandpaare 43 für vier Fächer 41 vorgesehen. Es versteht sich, daß auch mehr oder weniger als vier Fächer 41 vorgesehen sein können.

Wenn das Einschieben einer Platte 51 in eine Hülle 25 beendet ist, wird diese seitlich (quer zur Achse der Welle 42) aus dem Fach 41 herausgezogen (nach links in Fig. 5). Hiezu sind zwei Förderwalzen 60 vorgesehen, die unterhalb der Ebene der Hülle 25 mit eingeschobener Platte 51 vorgesehen sind. Von oben her werden wenigstens eine, vorzugsweise aber wie im Ausführungsbeispiel zwei, Andrückrollen 62 durch Linearantriebe 63 auf die Hülle 25 niedergedrückt, um den nötigen Reibschluß zwischen den Transportwalzen 60 und der Hülle 25 für den seitlichen Abtransport zu gewährleisten. Die Walzen 60 können zur Erhöhung der Reibung zwischen ihnen und einer Hülle 25 einen Kunststoffbelag aufweisen und/oder mit in Achsrichtung verlaufenden kleinen Nuten versehen sein. Falls die Walzen 60 Nuten aufweisen, ist ein schneller und zuverlässiger Abtransport einr Hülle 25 mit eingeschobener Platte 51 möglich, da an der Hülle 25 vorliegende Rippen des Separatormaterials in die Nuten an den Walzen 60 eingreifen.

Insbesondere, wenn die Walzen 60 kunststoffbeschichtet sind und/oder Nuten aufweisen, sind die Andrückrollen 62 allenfalls entbehrlich.

Der Anschlag 52 zum Justieren der Hülle 25 und der in diese eingeschobenen Platte 51 ist beispielsweise an einem Endlosförderglied 53 befestigt, so daß er (sh. Fig. 4 und Fig. 5) zwischen dem - in dieser Stellung seitlichen - Rand eines Faches 41 einerseits und den beiden Transportwalzen 60 anderseits durchbewegt werden kann, um eine Hülle 25 auf die Schenkel 56 der Spreizglieder 55 (sh. Fig. 4) aufzuschieben.

Vorteilhaft ist es, daß sich die Platte 51 in der Hülle 25 in einer definierten Lage befindet. Beispielsweise wird bei der in den Fig. 1 bis 5 gezeigten Ausführungsform der erfindungsgemäßen Vorrichtung durch den dem in Fig. 4 links liegenden Ende der Hülle 25 zugeordneten Anschlag 52 nicht nur die Hülle 25 selbst, in eine definierte Lage bewegt, indem sie auf die Schenkel 56 der Spreizglieder 55 aufgeschoben wird, sondern auch die in die Hülle 25 einzuschiebende Platte 51 kann nur so weit vorgeschoben werden, bis sie am Anschlag 52 anliegt. So wird erreicht, daß die Platte 51 in der Hülle 25 so angeordnet ist, daß der in Fig. 4 linke Rand der Platte 51 mit dem in Fig. 4 linken Ende der Hülle 25 bündig liegt. Hiezu sind für das Einschieben der Platte 51 in eine in einem Fach 41 in der Einschublage gehaltenen Hülle 25, die an einem Ende durch die Spreizglieder 55 offengehalten wird, Einschubfinger 70 vorgesehen, die so ausgebildet sind, daß sie an ihren an den Platten 51 angreifenden Teilen nicht dicker sind als die Platte 51 selbst, so daß die Einschubfinger 70 mit ihren Schenkeln 71 in die Hülle 25 eintauchen (vgl. Fig. 4b) und die Platte 51 so weit vorschieben können, daß ihr - bezogen auf die Vorschubrichtung vorderer, in Fig. 4 linker Rand mit dem von der Einschubseite abgekehrten Rand der Hülle 25 (in Fig. 4 der linke Rand der Hülle 25) bündig angeordnet ist.

Zusammenfassend kann ein bevorzugtes Ausführungsbeispiel der erfindungsgemäßen Vorrichtung wie folgt beschrieben werden:

An der Abgabeseite einer Vorrichtung, in der aus bahnförmigem Separatormaterial schlauchförmige Hüllen 25 für Platten von Batterien oder Akkumullatoren hergestellt werden, ist ein Fächerstern 40 mit mehreren Fächern 41 angeordnet. Nachdem in ein Fach 41 eine Hülle 25 eingeführt worden ist, wird der Fächerstern 40 verdreht, um das Fach 41 mit der in ihm gehaltenen Hülle 25 in eine Einführstellung zu bewegen. In der Einführstellung wird die Hülle 25 im Fach 41 durch einen Anschlag 52 so weit verschoben, daß ihr einführseitiges Ende über Schenkel 56 von Spreizelementen 55 geschoben ist. Durch das von den Spreizelementen 55 offen gehaltene Ende der Hülle 25 wird eine Platte eingeführt, bis sie am Anschlag 52 anliegt. Dann wird die Hülle 25 mit in sie eingeschobener Platte durch Walzen 60 seitlich aus dem Fach 41 herausgezogen und der weiteren Verwendung zugeführt.

## Patentansprüche

1. Vorrichtung zum Einführen von Platten (51) für Batterien oder Akkumulatoren, insbesondere Industriebatterien oder -akkumulatoren, in Hüllen (25) aus Separatormaterial, **dadurch gekennzeichnet, daß** wenigstens ein Fach (41) für die Aufnahme einer Hülle (25) vorgesehen ist, das aus einer Stellung, in der die Hülle (25) in das Fach (41) eingeschoben wird, in eine Stellung, in der in die im Fach (45) angeordnete Hülle (25) eine Platte (51) eingeführt wird, verstellbar ist.

2. Vorrichtung nach Anspruch 1, **dadurch gekennzeichnet, daß** zwei oder mehrere Fächer (41) an einer gemeinsamen Welle (42), die in der Vorrichtung (11) drehbar gelagert ist, vorgesehen sind.

3. Vorrichtung nach Anspruch 1 oder 2, **dadurch gekennzeichnet, daß** die Fächer (41) von zwei zueinander parallelen Wänden (43), die an der Welle (42) befestigt sind, gebildet sind.

4. Vorrichtung nach einem der Ansprüche 1 bis 3, **dadurch gekennzeichnet, daß** an der Seite, von der her Hüllen (25) in ein Fach (41) eingeschoben werden, die Wände (43) mit schräg auseinanderlaufenden Leitblechen (44) versehen sind.

5. Vorrichtung nach einem der Ansprüche 1 bis 4, **dadurch gekennzeichnet, daß** die Fächer (41) in Richtung der Schmalseite der Hüllen (25) gemessen schmäler sind als die flach zusammengelegte Hülle (25) und in Längsrichtung gesehen länger sind als die Hüllen (25).

6. Vorrichtung nach einem der Ansprüche 1 bis 5, **dadurch gekennzeichnet, daß** an der Einschubseite des Faches (41) in seiner Stellung, in der eine Hülle (25) eingeschoben wird, wenigstens ein Paar von Transportrollen (20) oder Transportwalzen angeordnet ist.

7. Vorrichtung nach einem der Ansprüche 1 bis 6, **dadurch gekennzeichnet, daß** die Vorrichtung im Anschluß an eine Vorrichtung zum Herstellen von schlauchförmigen Hüllen aus bandförmigem Separatormaterial angeordnet ist.

8. Vorrichtung nach einem der Ansprüche 1 bis 7, **dadurch gekennzeichnet, daß** zwischen der Vorrichtung und der Vorrichtung zum Herstellen von schlauchförmigen Hüllen (25) aus Separatormaterial eine Vorrichtung zum Ablängen (30, 31, 32) von Hüllen(25) vorgesehen ist.

9. Vorrichtung nach einem der Ansprüche 1 bis 8, **dadurch gekennzeichnet, daß** dem Fach (41) in seiner Stellung, in der eine Platte (51) eingeschoben wird, ein gegebenenfalls verstellbarer Anschlag (52) zum Festlegen der der Einschubseite gegenüberliegenden Randes der Hülle (25) und der in diesen eingeschobenen Platte (51) vorgesehen ist.

10. Vorrichtung nach Anspruch 9, **dadurch gekennzeichnet, daß** der Anschlag (52) neben dem Längsrand des Faches (41) verschiebbar angeordnet ist.

11. Vorrichtung nach Anspruch 9 oder 10, **dadurch gekennzeichnet, daß** der Anschlag (52) einen in das Fach (41) eingreifenden Teil aufweist.

12. Vorrichtung nach einem der Ansprüche 1 bis 11, **dadurch gekennzeichnet, daß** in der Stellung des Faches (41), in der eine Platte (51) in die Hülle (25) eingeschoben wird, zwei Spreizfinger (55) für das Offenhalten des Endes der Hülle (25), durch das die Platte (51) eingeschoben wird, vorgesehen sind.

13. Vorrichtung nach Anspruch 12, **dadurch gekennzeichnet, daß** die Spreizfinger (55) im wesentlichen L-förmig sind und daß die einen Schenkel (56) aus zwei Federlamellen (50) besitzen, die zu ihren freien Enden (58) hin spitz aufeinanderzu konvergieren.

14. Vorrichtung nach Anspruch 13, **dadurch gekennzeichnet, daß** die spitz aufeinander konvergierenden Schenkel (56) der Spreizelemente (55) bei in der Justierlage ausgerichtet Hülle (25) von der Einschubseite her in die Hülle (25) eingreifen.

15. Vorrichtung nach einem der Ansprüche 1 bis 14, **dadurch gekennzeichnet, daß** neben einem in seiner Beschickungsstellung befindlichen Fach (41) eine Vorrichtung (50) zum Zuführen und Vorschieben von Platten (51) angeordnet ist.

16. Vorrichtung nach Anspruch 15, **dadurch gekennzeichnet, daß** die Vorrichtung (50) zum Zuführen und Vorschieben von Platten (51) wenigstens einen Vorschubfinger (70/71) aufweist, der an dem, bezogen auf die Vorschubrichtung hinteren Rand der Platte (51) angreift und in die geöffnete Hülle (25) einführbar ist.

17. Vorrichtung nach einem der Ansprüche 1 bis 16, **dadurch gekennzeichnet, daß** neben dem in ihrer Einschubstellung befindlichen Fach (41) wenigstens eine Förderwalze (60) zum Herausziehen von Hüllen (25) mit eingeschobenen Platten (51) aus dem Fach (41) vorgesehen ist.

18. Vorrichtung nach Anspruch 17, **dadurch gekennzeichnet, daß** der wenigstens einen Transportwalze (60) wenigstens eine Niederhaltewalze (62) zugeordnet ist.

19. Vorrichtung nach Anspruch 18, **dadurch gekennzeichnet, daß** die Niederhaltewalzen (62) an motorisch vor- und zurückschiebbaren Halterungen vorgesehen sind, deren Bewegungsrichtung schräg zur Ebene des Faches (41) geneigt ist.

20. Vorrichtung nach einem der Ansprüche 17 bis 19, **dadurch gekennzeichnet, daß** die Förderwalzen (60) eine geriffelte oder genutete Mantelfläche aufweisen.

21. Vorrichtung nach einem der Ansprüche 17 bis 20, **dadurch gekennzeichnet, daß** die Förderwalzen (60) einen reibungserhöhenden Mantel z.B. aus Kunststoff tragen.

22. Vorrichtung nach einem der Ansprüche 12 bis 21, **dadurch gekennzeichnet, daß** im Bereich der Spreizfinger (55) wenigstens ein Stempel (80/81) zum verübergehenden Festlegen der Hülle (51) an den Spreizfingern (55) vorgesehen ist.
